# EUROPEAN PATENT APPLICATION

(11) **EP 2 266 404 A1**
(43) Date of publication of application: **29.12.2010**
(21) Application number: 10164055.5
(22) Date of filing: 27.05.2010
(51) Int. Cl.: A21D 2/26, A21D 13/08, A23L 1/305, A21D 10/00, A23L 1/307, A21D 13/00

(54) **Baked products**

(30) Priority: 02.06.2009 EP 09161685; 02.06.2009 EP 09161684
(71) Applicant: Unilever PLC, A Company Registered In England And Wales under company no. 41424 of Unilever House, London, Greater London EC4Y 0DY (GB); Unilever NV, 3013 AL Rotterdam (NL)
(72) Inventor: Watts, Karen, Margaret, Bedford, Bedfordshire MK44 1LQ (GB); Wix, Loyd, Bedford, Bedfordshire MK44 1LQ (GB)
(74) Representative: Clarke, Christopher John

(57) **Abstract**

A method of maintaining softness in a cookie or cake, the method comprising: preparing a dough comprising 20-55% flour having a gluten content of less than 12 wt%, 10-50% sugar, 2-20% fat, 0-10% egg and / or milk solids, 5-30% water and a hydrophobin, and then baking the dough to form the cookie or cake is provided. The use of a hydrophobin for maintaining softness in a cookie or cake comprising flour having a gluten content of less than 12 wt% is also provided.

## Description

### Technical Field of the Invention

The present invention relates to baked products such as cookies and cakes. In particular it relates to cookies and cakes which have a reduced tendency to go stale.

### Background to the invention

Frozen confections such as ice cream products are often combined with baked products such as cookies. Examples of such products include sandwich products, where a frozen confection is held between two cookies, and ice creams which contain pieces of cake (e.g. brownies) or cookies as inclusions.

Cookies and cakes are composed largely of flour, sugar, fat/oil and water. To produce the product, the mix of ingredients (i.e. a batter or dough) is baked. Wheat flour consists principally of starch (comprising amylose and amylopectin), but also contains a significant amount of protein (gluten). The structure of baked products is determined by networks formed by both the gluten and the amylopectin components of the flour. It is well known that cakes and cookies become stale, i.e. they lose their soft, crumbly texture and become harder after a few hours or days. Staling is a complex process which (although it is not completely understood) is known to involve a number of processes including loss of moisture, crystallisation of the amylopectin and a reduction in the plasticity of the gluten network.

A known method of reducing staling in cookies involves the use of amylase enzymes that break down the starch into simple sugars. These help to retain water within the product and thereby maintain plasticity. In addition, enzymic damage to the amylopectin hinders crystallisation. However, it is difficult to control the enzymes and there is a risk that the starch may be excessively degraded, which adversely affects the texture of the baked products making them less crumbly and sticky. Thus there remains a need for an improved method of reducing staling in baked products.

### Brief Description of the Invention

We have now found that by adding hydrophobin to the dough, the staling process of cookies can be delayed, provided that the flour has a low gluten content. Accordingly, in a first aspect, the present invention provides a method of maintaining softness in a cookie or cake, the method comprising: preparing a cookie dough comprising 20-55% flour having a gluten content of less than 12 wt%, 10-50% sugar, 2-20% fat, 0-10% egg and / or milk solids, 5-30% water and a hydrophobin, and then baking the mix to form the product.

Preferably the flour contains less than 11 wt%, more preferably less than 10 wt%, even more preferably less than 9%, most preferably less than 8% gluten.

Preferably the product comprises at least 0.001 wt% hydrophobin.

Preferably the product comprises at most 1 wt% hydrophobin.

Preferably the hydrophobin is in isolated form.

Preferably the hydrophobin is soluble in water.

Preferably the hydrophobin is a class II hydrophobin.

In another aspect, the invention provides the use of a hydrophobin for maintaining softness in a cookie or cake comprising flour having a gluten content of less than 12 wt%.

### Detailed Description of the Invention

Unless defined otherwise, all technical and scientific terms used herein have the same meaning as commonly understood by one of ordinary skill in the art. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc., and the full version entitled Current Protocols in Molecular Biology. All percentages, unless otherwise stated, refer to the percentage by weight.

### Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xn-C-X₅₋₉-C-C-X₁₁₋₃₉-C-X₈₋₂₃-C-X₅₋₉-C-C-X₆₋₁₈-C-Xₘ (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

Xₙ-C-X₁₋₅₀-C-X₀₋₅-C-X₁₋₁₀₀-C-X₁₋₁₀₀-C-X₁₋₅₀-C-X₀₋₅-C-X₁₋₅₀-C-Xₘ (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, α-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labelling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

In our EP-A 1 623 631 we have previously found that hydrophobin allows the production of foams with excellent stability to disproportionation and coalescence.

Hydrophobins identified to date are generally classed as either class I or class II. Both types have been identified in fungi as secreted proteins that self-assemble at hydrophobilic interfaces into amphipathic films. Assemblages of class I hydrophobins are generally relatively insoluble whereas those of class II hydrophobins readily dissolve in a variety of solvents. Preferably the hydrophobin is a class II hydrophobin. Preferably the hydrophobin is soluble in water, by which is meant that it is at least 0.1 % soluble in water, preferably at least 0.5%. By at least 0.1 % soluble is meant that no hydrophobin precipitates when 0.1 g of hydrophobin in 99.9 mL of water is subjected to 30,000 g centrifugation for 30 minutes at 20°C.

Hydrophobin-like proteins (e.g."chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

### Cookies and cakes

The meaning of the terms such as cookies, cakes, biscuits and bread varies between countries. As used herein, the term "cookie" means a food product which is produced by baking a mix (dough) comprising soft wheat flour, sugar, fat/oil and water. Cookies are normally baked for long enough that they are crisp on the outside but remain soft and moist in the centre. Cakes are also baked to be soft and moist in the centre. Water is an essential component of the cookie or cake dough, because it allows the starch to gelatinize during baking. Cookies have a porous structure formed during baking as the water in the dough is driven off as steam. Cakes are deliberately aerated, so cake dough typically contains a chemical raising agents or yeast to form a more open, aerated structure than cookies. Over time, cookies and cakes tend to go hard and dry, losing their desirable texture. Cookies and cakes therefore differ from biscuits in that biscuit dough generally contains little or no water, so the starch is not gelatinized during baking, and the biscuit is hard and dry. In contrast to cookies, biscuits tend to go soft and soggy over time if left exposed to the atmosphere. Cookies and cakes also differ from products such as bread. Bread dough contains water, but uses hard flour and is deliberately aerated by means of yeast.

A typical cookie mix (dough) comprises 20-55%, preferably 25-40% soft flour, 10-50%, preferably 25 to 40% sugar, 2-20%, preferably 5-10% fat, 0-10%, preferably 2-7% egg and / or milk solids and 5-30%, preferably 10-20% water. A typical cake dough further comprises a raising agent (e.g. a mix of cream of tartar and sodium bicarbonate). The water content of the baked cookie or cake is small (<10%), since most of the water is driven off during the baking process. Hence the amounts of the ingredients in the baked products are proportionately higher.

The flour used in the mixes and products of the invention is a soft wheat flour with a gluten content of less than 12 wt%. Preferably the flour contains less than 11 wt%, more preferably less than 10 wt%, even more preferably less than 9%, most preferably less than 8% gluten.

Fats / oils that may be used include coconut oil, palm oil, palm kernel oil, cocoa butter, milk fat, sunflower oil, safflower oil, olive oil, linseed oil, soybean oil, rapeseed oil, and mixtures, fractions or hydrogenates thereof. Sugars that may be used include simple sugars such as sucrose, fructose, lactose, and dextrose; corn / glucose syrups and invert sugar. In addition, the cookies and cakes may contain other ingredients conventionally found in such products, such as starch, salt, flavours, colours (e.g. caramel), egg, milk, cocoa powder, inulin, emulsifiers (e.g. lecithin), stabilisers, preservatives and inclusions such as pieces of nuts, fruit and chocolate.

Typically, the product will contain at least 0.001 wt%, hydrophobin, more preferably at least 0.005 or 0.01 wt%. Typically the product will contain less than 1 wt% hydrophobin, more preferably less than 0.5 wt%, for example about 0.1 wt%. The hydrophobin can be from a single source or a plurality of sources e.g. a mixture of two or more different hydrophobins.

Typically, the hydrophobin is added to the product of the invention in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism. Consequently, where ingredients are present or added that contain fungal contaminants, which may contain hydrophobin polypeptides, this does not constitute adding hydrophobin within the context of the present invention.

The cookies or cakes may be produced by simply incorporating hydrophobin into the mix / dough, for example by producing an aqueous solution of hydrophobin which is then combined with the other ingredients followed by baking the dough.

Preferably the cookie or cake has a hardness (i.e. a peak force measured as described in example 1 below) which is at least 25% less than the hardness of the equivalent conventional product (i.e. which does not contain hydrophobin).

The cookie or cake can be combined with a frozen confection, such as ice cream, sorbet, water ice, fruit ice, frozen yoghurt and the like to form a frozen confection product, for example a sandwich product, where the frozen confection is held between two cookies, or an ice cream which contains pieces of cookies as inclusions.

The present invention will now be further described with reference to the following examples which are illustrative only and non-limiting.

### Examples

### Example 1

A dry cookie mix was produced having the formulation shown in Table 1.

**Table 1**

| **Ingredient (g)** | **Formulation 1** |
|---|---|
| Wheat flour ( <9% gluten) | 30 |
| Sucrose | 38 |
| Salt | 0.5 |
| Vegetable oil | 8.0 |
| Dried egg yolk | 4.0 |
| Flavour | 1.0 |
| Sodium Bicarbonate | 0.5 |

Hydrophobin HFBII was obtained from VTT Biotechnology, Finland. It had been purified from *Trichoderma reesei* essentially as described in WO00/58342 and Linder et al., 2001, Biomacromolecules 2: 511-517. A 100 ml aqueous solution of 0.1 wt% HFBII was aerated to a volume of 200ml using an Aerolatte hand-held battery-powered whisk (Aerolatte Ltd, Radlett Hertfordshire, UK). The whisk rotor is a wire coil shaped in a horizontal circle with an outer diameter of 22 mm rotated about a vertical axis through its centre at a rotational speed of approximately 12,000 rpm. The foam was allowed to drain and after 20 minutes the free water was removed by pipette and discarded.

A cookie dough containing hydrophobin was produced by blending 150g of the dry mix, 15g of water and approximately 120ml of the drained foam (which had an overrun of about 100%). A conventional dough was produced by stirring 150g of the dry mix into 30ml of water.

Each dough was then rolled out to form a sheet approximately 3mm thick, from which circular pieces were cut. The pieces made from the standard dough weighed approximately 18g, and those made from the HFB-containing dough weighed approximately 15g. It was observed that the dough which contained HFB was more moist and slightly stickier than the conventional dough. The pieces were baked at 170°C in a fan oven for approximately 12 minutes (conventional) and 16 minutes (HFB-containing) to produce cookies which were crisp on the outside but moist in the centre.

The baked cookies were allowed to cool, and then broken by hand to assess their softness. The HFB-containing cookies were observed to be softer immediately after baking. After storage for several days in a closed (but not air tight) plastic box, the conventional cookies became harder, drier and more brittle. In contrast, the HFB-containing cookies remained soft.

In order to quantify this, the hardness of the cookies after 2 weeks of storage was measured by using a TPA texture analyser (Stable Micro Systems) with a blunt knife blade probe (approximately 1 mm in width) and a 50kg load cell. The probe was pushed into the cookies at a speed of 2mm/s until they broke. The peak force (i.e. the force at which the cookie broke) was measured. A hard cookie results in a high peak force (and vice versa). The conventional cookies were observed to break with a distinct snap, i.e. they were brittle and fracture took place over a short period of time. In contrast, the HFB-containing cookies failed more gently over a longer time and with a lower peak force. Five cookies of each type were measured, and the average peak force for each type was determined, given in Table 2.

**Table 2**

| **Cookie** | **Peak force (kg)** |
|---|---|
| Conventional | 17 ± 1 |
| With hydrophobin | 9 ± 1 |

This example demonstrates that cookies containing hydrophobin and flour having a gluten content of less than 12 wt% are softer than conventional ones, and that the hydrophobin delays staling.

### Example 2

In order to demonstrate the effect of high and low gluten flour, further cookie mixes were produced having the formulations shown in Table 3. Formulation 2 is in accordance with the invention insomuch as the flour used was standard self rising flour having a gluten content of 9.8% whereas formulation A is a comparative example containing a strong wheat flour (Sainsbury's strong white bread flour) having a gluten content of 14%.

**Table 3**

| **Ingredient (g)** | **Formulation 2** | **Formulation A** |
|---|---|---|
| Self rising flour (9.8% gluten) | 250 | - |
| Strong wheat flour (14% gluten) | - | 250 |
| Sucrose | 125 | 125 |
| Salt | 1.25 | 1.25 |
| Butter | 187.5 | 187.5 |

Hydrophobin HFBII was obtained from VTT Biotechnology as described above. Two 100ml aqueous solutions of 0.1 wt% HFBII were aerated to volumes of 400ml using a hand held blender (Breville) to produce a foam and then gently mixed with an Aerolatte hand-held battery-powered whisk (Aerolatte Ltd, Radlett Hertfordshire, UK). The foams were allowed to drain and after 20 minutes free water was removed by pipette.

Conventional doughs (without hydrophobin) were produced by blending the mixes of formulations 2 and A. Cookie doughs containing hydrophobin were prepared by blending the mixes of formulation 2 or A and mixing each with one of the hydrophobin foams (approximately 300ml).

As before, each dough (formulation 2 +/- hydrophobin & formulation A +/hydrophobin) was rolled out to form a sheet approximately 3mm in thickness, from which circular pieces were cut. It was observed that the doughs which contained hydrophobin were again more moist and stickier compared to the doughs without hydrophobin. Ten individual raw cookies, per sample, were placed onto a lined tray and cooked in a fan assisted oven at 170°C for approximately 12 minutes (conventional) and 16 minutes (hydrophobin containing) to produce cookies which were crisp on the outside and moist in the centre.

After baking, the cookies were allowed to cool and then broken by hand to assess their softness. The hydrophobin containing cookies of formulations 2 and A were observed to be softer immediately after baking.

The hardness of the cookies was qualitatively assessed after 2 weeks of storage in a closed (but not air tight) plastic box. The conventional cookies (i.e. without hydrophobin) of formulations 2 and A were observed to break with a distinct snap, i.e. they were brittle and fracture took place over a short period of time. The hydrophobin containing cookie of formulation A (high gluten flour) was also brittle. In contrast, the hydrophobin containing cookie of formulation 2 containing low gluten flour failed the test more gently and over a longer period of time. Three cookies of each type were also assessed after 2 weeks of storage by using a TPA analyser as described above, the average peak forces for each type was determined and the results are given in Table 4.

The results show that cookies with high gluten flour were harder after a 2 week period of staling, both with and without hydrophobin. In addition cookies with low gluten flour and without hydrophobin were also harder after a 2 week period of staling. In contrast, the cookies with low gluten flour and hydrophobin were determined to have maintained their softness. This quantitative data supports the qualitative observations.

**Table 4**

| **Cookie** | **Peak force (kg)** |
|---|---|
| Formulation 2 (with hydrophobin) | 1.6 |
| Formulation 2 (without hydrophobin) | 2.3 |
| Formulation A (with hydrophobin) | 2.8 |
| Formulation A (without hydrophobin) | 3.7 |

### Example 3

Finally, a comparison was performed to compare the performance of hydrophobin to the known anti-staling agent amylase. A cookie dough was made by blending the mix according to formulation 2 (i.e. low gluten flour, without hydrophobin) to which amylase ("Ritchies Amylase") was then added in an amount of 14ppm which is typical of the levels used in the baking industry. A cookie was prepared from this dough and stored for two weeks in a closed (but not air tight) plastic box. The cookie of Example 3 was observed to have remained soft and was comparable to the cookie of formulation 2 with hydrophobin as described above. Five cookies of Example 3 were also measured using the TPA as described above, the average peak forces were determined and the result is given in Table 5. It can be seen that the average peak force of the cookie with amylase was less than that of the cookie of formulation 2 without hydrophobin and therefore the amylase had maintained some softness in the cookie. However, the cookie was not as soft as the cookie of formulation 2 with hydrophobin and therefore it can be seen that hydrophobin provided better maintenance of softness than amylase.

**Table 5**

| **Cookie** | **Peak force (kg)** |
|---|---|
| Formulation 2 (with amylase) | 2.1 |

### Summary

It can therefore be readily observed that hydrophobin is able to maintain the softness of baked goods which contain flour with a gluten content of less than 12 wt%. Furthermore, it has been shown that hydrophobin is at least comparable, if not better, in its performance compared to conventional anti-staling agents such as amylase.

The various features and embodiments of the present invention, referred to in individual sections above apply, as appropriate, to other sections, mutatis mutandis. Consequently features specified in one section may be combined with features specified in other sections, as appropriate. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Claims

1. A method of maintaining softness in a cookie or cake, the method comprising: preparing a dough comprising 20-55% flour having a gluten content of less than 12 wt%, 10-50% sugar, 2-20% fat, 0-10% egg and / or milk solids, 5-30% water and a hydrophobin, and then baking the dough to form the cookie or cake.

2. A method according to claim 1 wherein the flour contains less than 11 wt% gluten.

3. A method according to claim 1 or claim 2 wherein the flour contains less than 10 wt% gluten.

4. A method according to any of the preceding claims wherein the dough comprises at least 0.001 wt% hydrophobin.

5. A method according to any of the preceding claims wherein the dough comprises at most 1 wt% hydrophobin.

6. A method according to any of the preceding claims wherein the hydrophobin is in isolated form.

7. A method according to any of the preceding claims wherein the hydrophobin is soluble in water.

8. A method according to any of the preceding claims wherein the hydrophobin is a class II hydrophobin.

9. Use of hydrophobin for maintaining softness in a cookie or cake comprising flour having a gluten content of less than 12 wt%.
